Europäisches Patentamt

European Patent Office

Office européen des brevets

(11) Veröffentlichungsnummer: **0 499 971 B1**

# EUROPÄISCHE PATENTSCHRIFT

(45) Veröffentlichungstag der Patentschrift: **23.08.95**

(51) Int. Cl.⁶: **B61H 15/00**

(21) Anmeldenummer: **92102431.1**

(22) Anmeldetag: **13.02.92**

(54) **Zangenartiges Bremsgestänge, insbesondere für Scheibenbremsen von Schienenfahrzeugen.**

(30) Priorität: **20.02.91 DE 4105299**

(43) Veröffentlichungstag der Anmeldung:
**26.08.92 Patentblatt 92/35**

(45) Bekanntmachung des Hinweises auf die
Patenterteilung:
**23.08.95 Patentblatt 95/34**

(84) Benannte Vertragsstaaten:
**DE FR GB IT SE**

(56) Entgegenhaltungen:
**EP-A- 0 121 815**
**CH-A- 108 630**
**DE-A- 2 346 828**
**FR-A- 2 294 898**

(73) Patentinhaber: **KNORR-BREMSE AG**
**Postfach 40 10 60**
**D-80710 München (DE)**

(72) Erfinder: **Bartlechner, Manfred**
**Am Katzenstein 1**
**W-8031 Wessling (DE)**
Erfinder: **Haberzeth, Thomas**
**Hansjakobstrasse 36**
**W-8000 München 80 (DE)**
Erfinder: **Staltmeir, Josef**
**Knorrstrasse 83**
**W-8000 München 40 (DE)**

Rank Xerox (UK) Business Services
(3.10/3.09/3.3.3)

**Beschreibung**

Die Erfindung betrifft ein zangenartiges Bremsgestänge für Fahrzeuge, insbesondere für Scheibenbremsen von Schienenfahrzeugen, mit zwei Zangenhebeln, deren eine Enden mit Bremsbacken gekoppelt sind, deren andere Enden vermittels eines Bremskraftmotors auseinanderspreizbar sind und welche in ihrem mittleren Bereich durch eine Zangenzugstange mit integriertem, ein Schraubgetriebe beinhaltendem Hubnachsteller verbunden sind, wobei der Hubnachsteller vermittels eines Steuergestänges in Abhängigkeit vom Spreizhub an den bremskraftmotorseitigen Enden der Zangenhebel steuerbar ist, mit einem zumindest nahe der Anlenkstelle eines Kraftabgabegliedes des Bremskraftmotors an dem einen Zangenhebel angelenkten, ersten Steuergestängeteil und mit einem an einem Widerlager abgestützten, zweiten Steuergestängeteil, wobei das Widerlager mit der bremskraftmotorsseitigen Lagerstelle des anderen Zangenhebels fest verbunden ist.

Ein derartiges Bremsgestänge ist aus der DE-OS 23 46 828 bekannt. Die Zangenzugstange ist hierbei im wesentlichen als Gewindespindel eines Spannschlosses ausgebildet, die außenseitig des einen Zangenhebels mit einem grob verzahnten Ratschenrad gekoppelt ist, in welches unter Federkraft eine an einem drehbaren Gehäuse gelagerte Ratsche eingreift. Als Steuergestänge ist ein Bowdenzug vorgesehen, dessen Seele als erstes Steuergestängeteil an einer Verlängerung des vom Bremskraftmotor beweglichen Zangenhebels angelenkt ist; die Hülle des Bowdenzuges ist als zweites Steuergestängeteil am Widerlager abgestützt. Der Bowdenzug ist über eine ein Spiel aufweisende Anschlagvorrichtung mit dem Ratschengehäuse gekoppelt, derart, daß er nach Überwinden des Spieles ein Drehen des Ratschengehäuses bewirkt. Bei übermäßigen Bremshub soll das Ratschengetriebe einen Zahn weiterratschen und während des nachfolgenden Lösehubes durch Drehen der Gewindespindel eine Spielnachstellung bewirken. Zum manuellen Rückstellen ist die Gewindespindel nach manuellem Ausheben der Ratsche rückschraubbar. Dieses bekannte Bremsgestänge ist mit dem Mangel versehen, daß die Gewindespindel keine Sicherung gegen ungewollte Drehungen beim Bremshub aufweist, insbesondere bei zu großem Anlegehub mit noch leichtgängig drehbarer Gewindespindel kann daher die Ratsche das Ratschenrad ungewollt mitdrehen, statt dessen Zahn zu überratschen, so daß keine Spielnachstellung erfolgt. Weiterhin kann das als einfacher Bowdenzug ausgebildete Steuergestänge nur einen kleinen, gegenüber dem an sich geringen Bremshub des Bremskraftmotors nur um einen der Verlängerung des Zangenhebels entsprechenden Wert geringfügig vergrößerten Betätigungshub zur Verfügung stellen, eine feinfühlige und genaue Hubnachstellung ist damit nicht möglich. Die unvermeidliche Eigenelastizität des Bowdenzuges stört zudem die Hubnachstellung. Das außenseitig zu einem Zangenhebel angeordnete Ratschengetriebe führt zu einer unerwünschten Verbreiterung des für das Bremsgestänge erforderlichen Einbauraumes.

Bei einem weiteren, aus dem DE-Gebrauchmuster 6 606 038 bekannten Bremsgestänge ist parallel zum vom Bremskraftmotor bewegbaren Zangenhebel ein Steuerhebel vorgesehen, dessen eines Ende bremsbackenseitig am Zangenhebel angelenkt und dessen anderes Ende an einem Widerlager gelagert ist. Der Hubnachsteller ist durch eine Anschlagkupplung zum Steuerhebel steuer- und betätigbar. Auch hier stehen nur sehr geringe Steuerhübe für den Hubnachsteller zur Verfügung, der Steuerhebel verbreitert bei außenseitiger Anordnung das gesamte Bremsgestänge in unerwünschter Weise und bei ebenfalls offenbarter Anordnung innerhalb des Zangenhebels muß er mehrfach gekröpft ausgebildet sein, seine Anlenkung am Festpunkt kann durch einen dort befindlichen Bremskraftmotor kompliziert werden und die Gelenkstelle zwischen Zangenhebel und Zangenzustange muß gff. zweigeteilt ausgebildet werden.

Es ist Aufgabe der Erfindung, ein Bremsgestänge der eingangs genannten Art derart auszugestalten, daß Seitenverlagerungen der bremsbackenseitigen Enden der Zangenhebel, wie sie beispielsweise durch Seitenverlagerungen einer zwischen diesen verlaufenden Bremsscheibe bedingt sein können, keinerlei Einfluß auf das Lösespiel bzw. die Hubnachstellung des Bremsgestänges nehmen. Weiterhin soll das Bremsgestänge dem Hubnachsteller einen zu dessen sicherer und genauer Funktion ausreichend großen Betätigungshub zur Verfügung stellen, wobei während des Festbremshubes des Bremsgestänges in diesem auftretende, elastische Verformungen ohne Einfluß auf die Hubnachstellung bleiben sollen. Das Brems- und insbesondere auch das Steuergestänge soll einen einfachen und einbaugünstigen, stabilen Aufbau aufweisen und die Nachstellvorgänge nicht durch unerwünschte Elastizitäten verfälschen.

Diese Aufgabe wird nach der Erfindung dadurch gelöst, daß das Steuergestänge als erstes Steuergestängeteil eine Zugstange aufweist, deren eines Ende am einen Zangenhebel angelenkt ist, die sich zumindest annähernd parallel zur Kraftabgaberichtung des Bremskraftmotors in Richtung zum anderen Zangenhebel erstreckt und deren anderes Ende am einen Ende eines zweiarmigen, das zweite Steuergestängeteil bildenden Übersetzungshebels angelenkt ist, daß der im wesentlichen senkrecht zur Kraftabgaberichtung verlaufende Übersetzungshebel nahe dieser Anlenkung am Widerlager gelagert und mit seinem anderen Ende mit einem Betätigungshebel des Hubnachstellers gekoppelt ist, und daß das Steuergestänge zwischen der Anlenkung am einen Zangenhebel und der Ankopplung am Betätigungshebel ein elastisches Glied aufweist, das in Bewegungsrichtung beim Zuspannen der Scheibenbremse entgegen der Kraft einer vorgespannten Feder verformbar ist.

Nach der weiteren Erfindung vorteilhafte Ausgestaltungsmöglichkeiten eines derartig ausgebildeten Bremgestänges sind den Merkmalen der Unteransprüche entnehmbar. Bei Ausbildung nach den Merkmalen des Anspruches 8 wird bei Seitenauslenkungen des Bremsgestänges der Sollhub exakt konstant gehalten, wobei bei Ausbildung nach Unteranspruch 9 eine Übersetzung des Betätigungshubes des Bremskraftmotors zu einem 4-fach größeren Betätigungshub für den Hubnachsteller erfolgt.

In den Zeichnungen ist ein Ausführungsbeispiel für ein nach der Erfindung ausgebildetes Bremsgestänge beispielsweise dargestellt, und zwar zeigt

| | |
|---|---|
| Fig.1 | eine Aufsicht mit z.T. aufgeschnittenen Bauelementen auf das Bremsgestänge, |
| Fig.2 | einen Schnitt durch die Zangenzugstange und den in diese integrierten Hubnachsteller in vergrößertem Maßstab und |
| Fig.3, 4 und 5 | Schnittbilder gemäß den Linien A-B, C-D bzw. E-F in Fig.2 in nochmals vergrößertem Maßstab. |

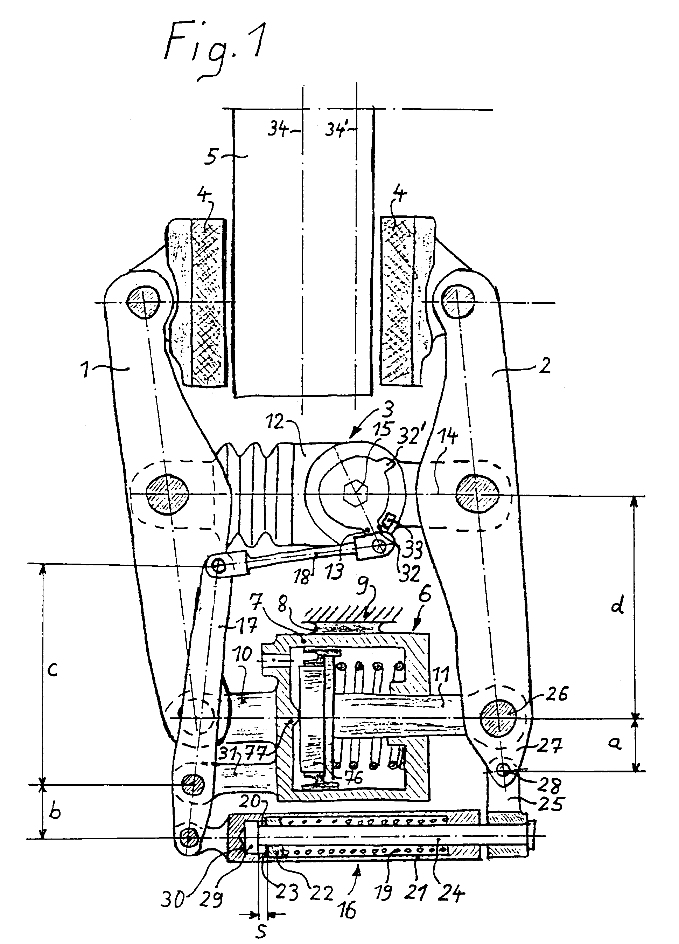

Gemäß der Darstellung nach Fig.1 ist das zangenartige Bremsgestänge im wesentlichen als übliche H-Bremszange mit zwei Zangenhebeln 1 und 2 ausgebildet, wobei die beiden Zangenhebel 1 und 2 in ihrem mittleren Bereich durch eine Zangenzugstange 3 gelenkig miteinander verbunden sind. An die einen Enden der Zangenhebel 1 und 2 sind Bremsbacken 4 angelenkt, zwischen welche eine abzubremsende Bremsscheibe 5 eingreift. Zwischen die anderen Enden der Zangenhebel 1 und 2 ist als Bremskraftmotor ein druckluftbeaufschlagbarer Bremszylinder 6 eingeordnet, dessen Zylindergehäuse 7 mittels einer elastischen Zwischenlage 8 an einem im weiteren nicht dargestellten, als Festpunkt dienenden Rahmenteil 9 gehaltert ist. Das Zylindergehäuse 7 trägt einerseits einen Lagerbock 10, an welchem das Ende des Zangenhebels 1 gelagert ist. Die als Kraftabgabeglied dienende Kolbenstange 11 des Bremszylinders 6 ist nahe des Endes des anderen Zangenhebels 2 angelenkt.

Die Zangenzugstange 3 ist mit einem integrierten Hubnachsteller 12 ausgestattet, dessen Aufbau später im einzelnen beschrieben wird; in Fig.1 ist ein Betätigungshebel 13 des Hubnachstellers 12 ersichtlich, welcher um eine zur Längsrichtung bzw. Achse 14 der Zangenzugstange 3 und zur Längsrichtung der Zangenhebel 1 und 2 im wesentlichen rechtwinklig verlaufende Achse 15 drehbar ist. Zur Betätigung des Hubnachstellers 12 ist der Betätigungshebel 13 mit einem Steuergestänge gekoppelt, welches eine Zugstange 16 als erstes Steuergestängeteil, einen zweiarmigen Übersetzungshebel 17 sowie einen Hebel 18 umfaßt. Die Zugstange 16 ist als ein gegen die Kraft einer vorgespannten Feder 19 verlängerbares Federglied mit einer integrierten Anschlagvorrichtung 20 ausgebildet, sie weist hierzu einen Zylinderkörper 21 auf, der die Feder 19 beinhaltet. Die Feder 19 ist einerseits gegen den Zylinderkörper 21 und andererseits gegen ein Anschlagteil 22 abgestützt, welches ringförmig ausgebildet ist und in Belastungsrichtung durch die Feder 19 gegen einen als Ringschulter im Zylinderkörper 21 ausgebildeten, ersten Anschlag 23 abgefangen ist. In den Zylinderkörper 21 greift verschieblich ein Zuganker 24 ein, der an seinem ins Freie ragenden Ende eine von der im wesentlichen parallel zur Kolbenstange 11 verlaufenden Zugstange 16 in Richtung zum Bremszylinder 6 auskragende Abwinklung 25 trägt, deren Ende an einer die Anlenkstelle 26 des Zangenhebels 2 an der Kolbenstange 11 überragenden Zangenhebelverlängerung 27 in einer Anlenkstelle 28 angelenkt ist; die Länge der Zangenhebelverlängerung 27 ist dabei zur Länge des ganzen Zangenhebels 2 sehr kurz bemessen. Innerhalb des Zylinderkörpers 21 durchragt der Zuganker 24 verschieblich die Feder 19 und das Anschlagteil 22 und endet mit einem Abstand s hinter diesem mit einem einen zweiten Anschlag 29 bildenden Teller, der in der dargestellten Lösestellung mit seiner dem Anschlagteil 22 abgewandten Seite an einem Ringflansch 30 des Zylindergehäuses 21 anliegt. Die den Abstand s als Spiel aufweisende Anschlagvorrichtung 20 wird somit aus dem Anschlagteil 22 und dem zweiten Anschlag 29 gebildet.

Das der Anlenkstelle 28 abgewandte Ende des Zylinderköpers 21 und damit der Zugstange 16 ist an einem Ende des Übersetzungshebels 17 angelenkt, der Übersetzungshebel 17 erstreckt sich im wesentlichen rechtwinklig zur Kolbenstange 11 und damit auch zur Zugstange 16 in Richtung zur Zangenzugstange 3, er überkreuzt dabei verbindungsfrei die Anlenkstelle des Zangenhebels 1 am Lagerbock 10. Nahe der Anlenkung an der Zugstange 16 ist der Übersetzungshebel 17 an einem Widerlager 31 angelenkt, welches fest am Zylindergehäuse 7 angeordnet ist. Der etwa parallel zur Zangenzugstange 3 verlaufende Hebel 18 koppelt das der Zangenzugstange 3 zugewandte Ende des Übersetzungshebels 17 mit dem Betätigungshebel 13, welcher von der Achse 15 etwas in Entfernungsrichtung vom Übersetzungshebel 17 gedreht in Richtung zum Bremszylinder 6 auskragt. Diese Drehlage des Betätigungshebels 13 ist durch Anlage eines an ihm vorgesehenen Anschlages 32 an einem an der Zangenzugstange 3 festen Widerlager 33 bestimmt, der Betätigungshebel 13 ist unter Abheben des Anschlages 32 vom Widerlager 33 im Uhrzeigersinn, in Drehrichtung zum Übersetzungshebel 17 hin, drehbar.

Zum Anschlag 32 entgegen dem Uhrzeigersinn um etwas über 90° versetzt befindet sich am Betätigungshebel 13 ein zweiter, dem Anschlag 32 gegenüberliegender Anschlag 32', derart, daß sich das Widerlager 33 zwischen diesen beiden Anschlägen 32,32' befindet. Bei Drehungen des Betätigungshebels 13 im Uhrzeigersinn gelangt der Anschlag 32' zur Anlage am Widerlager 33, bevor sich eine gestreckte Lage zwischen dem Betätigungshebel 13 und dem Hebel 18 ergibt: Es ist somit das Erreichen einer gestreckten Lage dieser beiden Hebel ausgeschlossen und stets ein Rückdrehen des Betätigungshebels 13 bei Druckbelastung durch den Hebel 18 gewährleistet.

In Fig.1 ist das Bremsgestänge bei seitlich nach links versetzter Lage der Bremsscheibe 5 mit deren Radialmittelebene 34 dargestellt; bei normaler, nicht zur Seite versetzter Lage der Bremsscheibe 5 würde sich deren Radialmittelebene in der durch die strichpunktierte Linie 34' bezeichneten Lage befinden und die Zangenhebel 1 und 2 nähmen eine um ihre Anlenkungen am Bremszylinder 6 im Uhrzeigersinn gedrehte Lage ein, derart, daß die sich etwa rechtwinklig zur Achse der Kolbenstange 11 erstrecken. Die Seitenverschieblichkeit der Bremsscheibe 5 kann beispielsweise durch ihre Anordnung an einen seitenverschieblichen Schienenfahrzeugradsatz gegeben sein. Das Steuergestänge ist derart ausgestaltet, daß es beim Seitenversatz der Bremsscheibe 5 keinerlei unerwünschte Steuerbewegungen auf den Betätigungshebel 13 ausübt, jedoch eine relativ große Wegübersetzung der kleinen, an der Kolbenstange 11 relativ zum Zylindergehäuse 7 auftretenden Bremshübe in große Betätigungshübe bzw. -drehungen für den Betätigungshebel 13 umsetzt. Hierzu ist das Brems- und das Steuergestänge nach der Formel

$$a:d = b:c$$

bemessen, wobei diese Verhältnisse zweckmäßig etwa 1:4 betragen. Dabei bedeuten

a den Abstand am Zangenhebel 2 zwischen dessen Anlenkungen am Bremskraftmotor 6, also der Anlenkstelle 26, und an der Zugstange 16, also der Anlenkstelle 28,

b den Abstand am Übersetzungshebel zwischen dessen Anlenkung an der Zugstange 16 und der Lagerung am Widerlager 31,

c den Abstand am Übersetzungshbel 17 zwischen dessen Lagerungen am Widerlager 31 und am Hebel 18 bzw. der Koppelung zum Betätigungshebel 13 und

d den Abstand am vorgenannten Zangenhebel 2 zwischen dessen Anlenkungen an der Kolbenstange 11 und an der Zangenzugstange 3.

Dabei ergibt sich in überraschender Weise, daß die Zangenhebelverlängerung 27 relativ kurz auszubilden ist, wenn bei vernünftiger Anordnung des Widerlagers 31 am Bremszylinder 6 der Übersetzungshebel 17 bei zweckmäßiger Gestaltung ein relativ großes Übersetzungsverhältnis von wie vorstehend erwähnt etwa 1:4 aufweisen soll. Infolge der kurzen Zangenhebelverlängerung 27 verläuft die Zugstange 16 nahe beim Bremszylinder 6, und somit einbauraumgünstig.

Das Bremsgestänge muß nicht für eine einzelne Scheibenbremse vorgesehen sein, wie es in Fig.1 dargestellt ist und vorstehend beschrieben wurde, es ist vielmehr auch möglich, dieses Bremsgestänge in ein anderes Bremsgestänge für Klotz- oder mehrere Scheibenbremsen zu integrieren. An die Zangenhebel 1,2 können dabei einerseits anstelle der Bremsbacken 4 weitere, zu Reibungsbremsen führende Bremsgestänge und/oder an die bremszylinderseitigen Enden dieser Zangenhebel 1 und/oder 2 Gestänge angelenkt sein, welche von einem andererorts angeordneten Bremskraftmotor bewegbar sind.

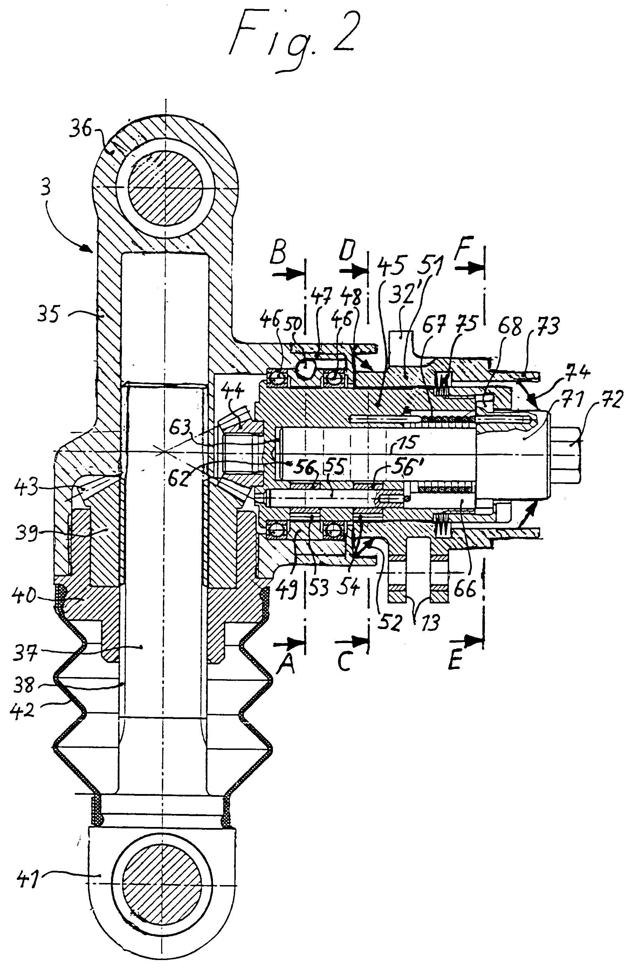

Die in Fig.1 vorgesehene Zangenzugstange 3 mit integriertem Hubnachsteller 12 ist zweckmäßig wie aus den Figuren 2 bis 5 ersichtlich aufgebaut. Gemäß Fig.2 weist die Zangenzugstange 3 ein im wesentlichen rohrartiges, einseitig geschlossenes Gehäuse 35 auf, an welchem am geschlossenen Ende ein Auge 36 zur Anlenkung an einem der Zangenhebel, beispielsweise dem Zangenhebel 2 gemäß Fig.1, angeformt ist. In das Gehäuse 35 greift eine Gewindespindel 37 ein, welche vermittels eines vorzugsweise selbsthemmend ausgebildeten Gewindes 38 mit einer im Gehäuse 35 drehbar gelagerten Mutter 39 verschraubt ist und so mit dieser ein Schraubgetriebe 37,39 bildet. Ein mit dem Gehäuse 35 fest verschraubter Deckel 40 hält gff. über ein nicht dargestelltes Axiallager die Mutter 39 im Gehäuse 35. Der Deckel 40 weist eine Öffnung zum beweglichen Durchtritt der Gewindespindel 37 auf, die Gewindespindel 37 ist an ihrem dem Gehäuse 35 abgewandten Ende mit einem Auge 41 zur Anlenkung am anderen Zangenhebel, gemäß Fig.1 dem Zangenhebel 1, versehen. Vom Gehäuse 35 bzw. dem Deckel 40 erstreckt sich ein die Gewindespindel 37 umgebender Faltenbalg 42 bis zum Auge 41.

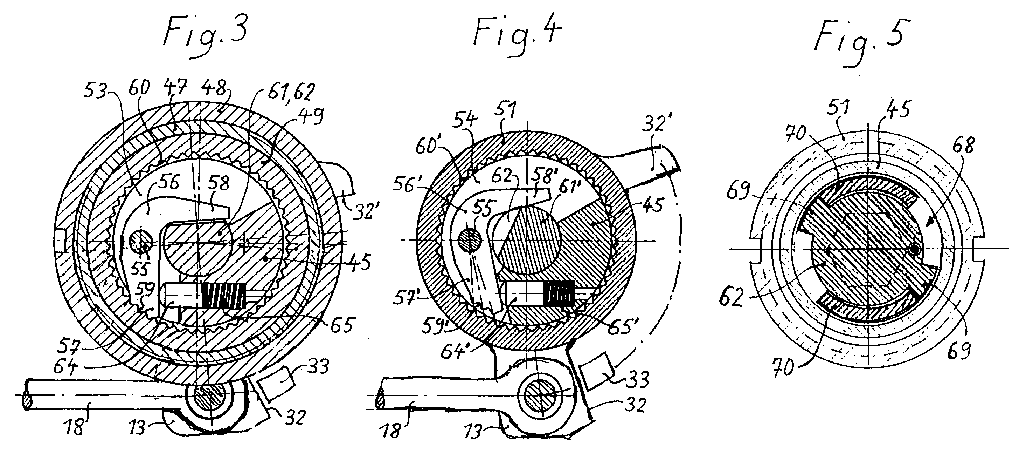

An ihrer dem Deckel 40 abgewandten Stirnseite ist die Mutter 39 mit einer Kegelradverzahnung 43 versehen, welche mit einem ritzelartigen Kegelrad 44 kämmt. Das Kegelrad 44 ist drehfest mit einer Nachstellerausgangswelle 45 verbunden, welche gleichachsig zur Achse 15 vermittels zweier Wälzlager 46 drehbar in einem rechtwinklig auskragenden Rohransatz 47 des Gehäuses 35 gelagert ist. Zur Halterung der Wälzlager 46 ist auf den Rohransatz 47 ein Deckelteil 48 mit radialen Innenflansch aufgeschraubt, zwischen den beiden Wälzlagern 46 befindet sich ein Distanzring 49, welcher beispielsweise durch eine in Nuten eingreifende Kugel 50 drehfest im Rohransatz 47 gehalten ist. Anschließend an das Deckelteil 48 ist auf einem aus dem Rohransatz 47 ragenden Abschnitt der Nachstellerausgangswelle 45 eine im wesentlichen hülsenartige Nachstellereingangswelle 51 drehbar gelagert, von welcher radial der Betätigungshebel 13 und der Anschlag 32' auskragen. Ein Dichtring 52 dichtet den Ringspalt zwischen dem Deckelteil 48 und der Nachstellereingangswelle 51 ab. Im vom Distanzring 49 bzw. der Nachstellereingangswelle 51 übergriffenen Bereich ist die Nachstellerausgangswelle 45 mit jeweils einer etwa 2/3 ihres Querschnittes erfassenden Aussparung 53 bzw. 54 versehen, wie es aus den Figuren 3 und 4 ersichtlich ist. Die Aussparungen 53 und 54 werden von einem Bolzen 55 durchquert, welcher exzentrisch, aber parallel zur Achse 15 in der Nachstellerausgangswelle 45 gehaltert ist. Auf den Bolzen 55 ist in der Aussparung 53 eine Klinke 56 mit zwei zueinander abgewinkelt verlaufenden Schenkeln 55 und 58 drehbar gelagert. Der eine Schenkel 57 endet mit einer außenseitigen Zahnung 59 vor der eine Zahnung 60 aufweisenden Innenwandung des Distanzringes 49, während der andere Schenkel 58 einen als Einfräsung ausgebildeten Nocken 61 einer Nockenwelle 62 übergreift, die gleichachsig zur Achse 15 in einer zur dem Kegelrad 44 abgewandten Seite hin offenen, die Aussparungen 53 und 54 durchsetzenden Sackbohrung 63 der Nachstellerausgangswelle 45 drehbar gelagert ist. Der Schenkel 57 ist innenseitig von einem in der Nachstellerausgangswelle 45 verschieblich gelagerten Druckbolzen 64 in Eingriffsrichtung der Zahnungen 59 und 60 belastet, der Druckbolzen 64 ist seinerseits von einer Feder 65 in dieser Eingriffsrichtung belastet. Der Distanzring 49 mit seiner Zahnung 60 und die Klinke 56 bilden somit eine als Klinkenradgetriebe 56,60 ausgebildete Einwegdrehkupplung zwischen der Nachstellerausgangswelle 45 und dem gehäusefesten Rohransatz 47.

In der Aussparung 54 befindet sich ein zum vorstehend beschriebenen gleichartig ausgestaltetes Klinkenradgetriebe 56',60', dessen Teile mit den gleichen, lediglich durch einen Strich ergänzten Bezugszahlen gemäß vorstehender Beschreibung in Fig.4 dargestellt sind; eine nochmalige Beschreibung des Klinkenradgetriebes 56',60' erübrigt sich daher. In einziger Abänderung befindet sich die Zahnung 60' nicht am Distanzring 49, sondern am Innenumfang der Nachstellereingangswelle 51. In beiden Figuren Fig.3 und Fig.4 sind weitere Bezugszahlen angegeben, deren Bedeutung der vorangehenden Beschreibung entnehmbar ist. Die beiden Klinkenradgetriebe 56,60 und 56',60' sperren jeweils bei Linksdrehung der Nachstellerausgangswelle 45 relativ zum Rohransatz 47 bzw. relativ zur Nachstellereingangswelle 51, in umgekehrter Relativdrehrichtung sind sie selbstlösend; bei Rechtsdrehung der Nachstellereingangswelle 51 wird somit über das Klinkenradgetriebe 56',60' die Nachstellerausgangswelle 45 mitgenommen, während das Klinkenradgetriebe 56,60 bei dieser Drehung löst und lediglich ein Rückdrehen der Nachstellerausgangswelle 45 sperrt; bei dieser Drehung der Nachstellerausgangswelle 45 wird über das aus dem Kegelrad 44 und der Kegelradverzahnung 43 gebildete Kegelradgetriebe 43,44 die Mutter 39 derart gedreht, daß sie sich auf der Gewindespindel 37 in Annäherungsrichtung zum Auge 41 verschraubt, wodurch die Zangenzugstange 3 insgesamt verkürzt wird.

In Fig.3 ist der Nocken 61 in einer Drehlage dargestellt, in welcher er ein Einrasten der Klinke 56 und Sperren des Klinkenradgetriebes 56,60 ermöglicht; in Fig.4 ist der entsprechende Nocken 61' um ca. 60° nach links verdreht dargestellt, die Klinke 56' wird durch Anlage des Nockens 61' am Schenkel 58' dabei in Aushebrichtung der Zahnung 59' von der Zahnung 60' entgegen der Belastung durch die Feder 65' gedreht, das Klinkenradgetriebe 56',60' ist in dieser Stellung entsperrt.

Im Anschluß an das Klinkenradgetriebe 56',60' ist in einem Ringraum 66 zwischen der Nachstellerausgangswelle 45 und der Nockenwelle 62 eine diese beiden Wellen derart gegeneinander verspannende Drehfeder 67 angeordnet, daß die Nockenwelle 62 sich aus ihrer in Fig.4 dargestellten Drehlage nach rechts in die in Fig.3 gezeigte Drehlage zu drehen sucht. An den Ringraum 66 anschließend ist zwischen ebenfalls der Nachstellerausgangswelle 45 und der Nockenwelle 62 ein Drehanschlag 68 vorgesehen, welcher ein Drehspiel von ca. 60° aufweist: Zum Bilden des Drehanschlages 68 sind an der Nockenwelle 62, wie aus Fig.5 ersichtlich, zwei radial auskragende Fortsätze 69 vorgesehen, welche in die Axialschlitze zwischen zwei etwa viertelzylindrischen Hülsenabschnitten 70 eingreifen, welche ihrerseits einander gegenüberliegend fest mit der Nachstellerausgangswelle 45 verbunden sind. Im Normalfall hält die Drehfeder 67 dabei den Drehanschlag 68 in der rechten Drehendstellung der Nockenwelle 62 geschlossen, wie es aus Fig.5 ersichtlich ist. Bei Linksdrehung der Nockenwelle 62 wird nach deren Relativdrehung um ca. 60° der Drehanschlag 68 andersseitig geschlossen, so daß bei Weiterdrehung die Nachstellerausgangswelle 45 formschlüssig mitgenommen wird.

Die Nockenwelle 62 überragt mit einem verstärkten, außenzylindrischen Abschnitt 71 axial die Nachstellerausgangswelle 45 und endet mit einem Schlüsselflächen 72 tragenden Abschnitt, die Schlüsselfläche 72 dienen dem Ansetzen eines Drehwerkzeuges und sind im Ausführungsbeispiel als Sechskant ausgeführt. Zwischen einem die Nachstellerausgangswelle 45 überragenden, innenzylindrischen Abschnitt 73 der Nachstellereingangswelle 51 und dem zylindrischen Abschnitt 71 der Nockenwelle 62 ist ein Dichtungsring 74 angeordnet, welcher ebenso wie der Dichtring 52 und auch der Faltenbalg 42 ein Eindringen von Fremdkörpern und Verschmutzung in den Innenraum des Hubnachstellers 12 und des Gehäuses 3 ausschließen soll.

In fluchtenden Ringräumen zwischen der Nachstellerausgangswelle 45 und der Nachstellereingangswelle 51 ist ein als Ringfeder 75 ausgebildetes Reibelement eingespannt, welches die Nachstellereingangswelle 51 axial in Andrückrichtung an das Deckelteil 48 des Rohransatzes 47 belastet und so Relativdrehungen zwischen beiden Wellen 1 und zwischen der Nachstellereingangswelle 51 und dem Rohransatz 47 reibbehaftet.

In der Lösestellung nimmt das Bremsgestänge im wesentlichen die aus Fig.1 ersichtliche Lage ein, lediglich die Bremsscheibe 5 befindet sich dabei normalerweise zentrisch zur Linie 34', bei Seitenverschiebungen des Radsatzes kann die Bremsscheibe 5 auch in die aus Fig.1 ersichtliche Lage mit der Radialmittelebene 34 oder einer spiegelbildlich hierzu andererseits der Linie 34' liegenden, nicht dargestellten Radialmittelebene gelangen. Bei diesen Seitenverschiebungen der Bremsscheibe 5 bleibt das Lüftspiel zwischen den Bremsbacken 4 und der Bremsscheibe 5 im wesentlichen konstant erhalten, auch über die Zugstange 16, den Übersetzungshebel 17 und den Hebel 18 wird bei diesen Seitenverschiebungen der Bremsscheibe 5 keinerlei Betätigungsbewegung auf den Betätigungshebel 13 übertragen, der Hubnachsteller 12 verbleibt also in Ruhe. Der Kolben 76 des Bremszylinders 6 liegt am Bremszylinderboden 77 an, der zweite Anschlag 29 ist am Ringflansch 30 abgefangen und weist zum Anschlagteil 22 den Abstand s auf, welcher proportional dem Sollüftspiel der Bremsbacken 4 zur Bremsscheibe 5 ist. Zugleich liegt der Anschlag 32 am Widerlager 33 an, zum Einjustieren dieser anliegenden Anschläge im Bremszylinder, in der Zugstange 16 und am Hubnachsteller 12 kann der Hebel 18 beispielsweise durch eine nicht dargestellte Verschraubung längenjustierbar ausgebildet sein. Die Nockenwelle 62 nimmt unter der Kraft der Drehfeder 67 bezüglich der Nachstellerausgangswelle 45 die aus Fig.5 ersichtliche Lage und bezüglich der Klinkenradgetriebe 56,60 und 56',60' die aus Fig.3 ersichtliche Lage ein, beide Klinkenradgetriebe sind unter der Kraft der Federn 65 bzw. 65' eingerastet.

Beim Auftreten von Fahrstößen schließen die anliegenden Anschläge 32,33 sowie 29,30 ein Schwingen des Betätigungsgestänges 16,17,18 aus, wodurch durch solche Schwingungen evtl. bewirkbare, unerwünschte Stellbewegungen am Hubnachsteller 12 ausgeschlossen werden.

Zum Bremsen wird der Kolben 76 des Bremszylinders 6 durch Druckmittelbeaufschlagung nach rechts verschoben, wodurch der Zangenhebel 2 um seine Anlenkung an der Zangenzugstange 3 entgegen dem Uhrzeigersinn verdreht wird, bis seine Bremsbacke 4 an der Bremscheibe 4 anliegt. Beim weiteren Ausfahren der Kolbenstange 11 dreht sich der Zangenhebel 2 um seine Anlenkung an der Bremsbacke 4, die Zangenzugstange 3 wird dabei gemäß Fig.1 geringfügig nach rechts parallelversetzt und dreht den Zangenhebel 1 um dessen Anlenkung am Lagerbock 10 im Uhrzeigersinn, bis dessen Bremsbacke 4 ebenfalls an der Bremsscheibe 5 anliegt. Während dieses Bremsenanlegens wird über die Anlenkstelle 28 und die Abwinklung 25 der Zuganker 24 mit dem zweiten Anschlag 29 nach rechts bewegt. Bei korrektem, vorangehendem Lösespiel zwischen den Bremsbacken 4 und der Bremsscheibe 5 gelangt der zweite Anschlag 29 gerade dann zur Anlage am Anschlagteil 22, wenn beide Bremsbacken 4 zur Anlage an die Bremsscheibe 5 gelangen. Der Zylinderkörper 21 mit dem Übersetzungshebel 17 sind bis dahin nahzu in Ruhe verblieben, die vorstehend zum Anlegen der linken Bremsbacke 4 an die Bremsscheibe 5 erwähnte Parallelverschiebung der Zangenzugstange 3 ist derart geringfügig, - sie beträgt lediglich etwa den halben Betrag des im Einmillimeterbereich liegenden Lüftspiels der linken Bremsbacke 4 - daß keinerlei Betätigung des Hubnachstellers 12 erfolgt.

Beim nachfolgenden Festbremshub mit kräftigem Anpressen der Bremsbacken 4 an die Bremsscheibe 5 erfolgt ein rascher Kräfteaufbau im Bremsgestänge, welches sich hierbei unter weiterem Ausfahren der Kolbenstange 11 elastisch verformt. Der rasche Kräfteaufbau führt zu entsprechenden Zugbeanspruchungen der Zangenzugstange 3, das in dieser enthaltene Schraubgetriebe 37,39 wird unter dieser Zugsbeanspruchung in Verschraubungsrichtung zum Verkürzen der Zangenzugstange 3 rasch so schwergängig, daß es durch die durch das Steuergestänge 16,17,18 übertragbaren, durch die Feder 19 begrenzten Kräfte nicht mehr bewegbar ist; in Schraubrichtung zum Verlängern der Zangenzugstange 3, d.h. Drehrichtung der Nachstellerausgangswelle 45 gemäß Fig.3 nach links, ist diese Nachstellerausgangswelle 45 durch das eingerastete Klinkenradgetriebe 56,50 gegen den Rohransatz 47 gesperrt. Beim weiteren Ausfahren der Kolbenstange 11 wird durch die Schwergängigkeit des Schraubgetriebes 37,39 über das Kegelradgetriebe 43,44, die Nachstellerausgangswelle 45 und das eingerastete Klinkenradgetriebe 56',60' die Nachstellereingangswelle 51 in Drehrichtung gemäß Fig.4 nach rechts gesperrt, so daß über den Betätigungshebel 13, den Hebel 18 und den Übersetzungshebel 17 der Zylinderkörper 21 festgehalten wird, während sich der Zuganker 24 mit dem zweiten Anschlag 29 weiter nach rechts bewegt und dabei das Anschlagteil 22 unter Abheben vom ersten Anschlag 23 und unter Spannen der Feder 19 mitnimmt.

Beim nachfolgenden Lösen ohne zwischenzeitlichem Verschleiß an den Bremsbacken 4 ergeben sich entsprechend umgekehrt verlaufende Vorgänge, wobei durch Anlage des Betätigungshebels 13 am Widerlager 33 der Zylinderkörper 21 festgehalten verbleibt, bis in der vollen Lösestellung der in Fig.1 dargestellte Ausgangszustand mit dem Abstand s wieder erreicht ist.

Während des Anlegehubes hält die Reibung der Tellerfedern 15 die Nachstellereingangswelle 51 in Anlage und damit Reibschluß über das Deckelteil 48 zum Rohransatz 47, so daß die Nachstellereingangswelle 51 ausreichend schwergängig ist, um beim Bewegen des zweiten Anschlages 29 von der Anlage am Ringflansch 30 zur Anlage am Anschlagteil 22 über den Hebel 18 und den Übersetzungshebel 17 den Zylinderkörper 21 festzuhalten. Hierdurch ist sichergestellt, daß während dieses Anlegehubes keine unerwünschten Bewegungen am Steuergestänge und am Hubnachsteller 12 erfolgen.

Falls zu Bremsbeginn die Bremsbacken 4 einen zu großen Lüfthub zur Bremsscheibe 5 aufweisen, liegen beim Anschlagen des zweiten Anschlages 29 am Anschlagteil 22 während des Einbremsvorganges die Bremsbacken 4 noch nicht an der Bremsscheibe 5 an. Beim weiteren Ausfahren der Kolbenstange 11 erfolgt daher noch kein Kraftaufbau im Bremsgestänge, insbesondere der Zangenzugstange 3, und das Schraubgetriebe 37,39 verbleibt auch in Verkürzrichtung der Zangenzugstange 3 leicht verschraubbar. Bei diesem weiteren Ausfahren der Kolbenstange 11 erfährt der Zuganker 24 mitsamt dem zweiten Anschlag 29 eine gemäß Fig.1 rechtsgerichtete Bewegung, über das Anschlagteil 22 und die vorgespannte Feder 19 wird dabei der Zylinderkörper 21 mitgenommen, wobei der Übersetzungshebel 17 um seine Lagerung am Widerlager 31 entgegen dem Uhrzeigersinn gedreht wird. Bezogen auf den Verschiebeweg der Zugstange 16 um das Übersetzungsverhältnis c:b hubübersetzt wird durch die Drehung des Übersetzungshebels 17 sowie den Hebel 18 der Betätigungshebel 13 gemäß Fig.1 im Uhrzeigersinn unter Abheben vom Widerlager 33 gedreht. Die Drehung des Betätigungshebels 13 und damit auch der mit diesem verbundenen Nachstellereingangswelle 51 wird über das in dieser Drehrichtung sperrende Klinkenradgetriebe 56',60' - s. Fig.4 mit jedoch in Drehlage nach Fig.3 befindlichem Nocken 61' - auf die Nachstellerausgangswelle 45 übertragen, welche somit mitgedreht wird; das Klinkenradgetriebe 56,60 gemäß Fig.3 ratscht bei dieser Rechtsdrehung der Nachstellerausgangswelle 45 durch. Unter der Kraft der Drehfeder 67 folgt die Nockenwelle 62 diesen Drehbewegungen nach, so daß die in Fig.3 gezeigte Lage des Nockens 61 bezüglich der Klinke 56 und die dieser gleichende Lage des Nockens 61' bezüglich der Klinke 56' erhalten bleiben. Der durch die Ringfeder 75 bedingte Reibschluß der Nachstellereingangswelle 51 zum Rohransatz 47 wird bei diesen Drehbewegungen überwunden, er ist schwächer als die durch die Vorspannung der Feder 19 übertragbare Drehkraft. Die Drehbewegung der Nachstellerausgangswelle 45 wird über das Kegelradgetriebe 43,44 in eine derartige Drehbewegung der Mutter 39 übertragen, daß diese sich auf der Gewindespindel 37 gemäß Fig.2 in Richtung zum Auge 41 verschraubt, wodurch die Länge der Zangenzugstange 3 verkürzt wird und die bremsbackenseitigen Enden der Zangenhebel 1 und 2 zum Verkleinern des übermäßigen Anlegehubes einander angenähert werden.

Die Drehung des Betätigungshebels 13 erfolgt, bis entweder die Bremsbacken 4 an der Bremsscheibe 5 zur Anlage gelangen, hierdurch ein rascher Kraftaufbau im Bremsgestänge und in der Zugstange 3 mit Sperren des Schraubgetriebes 37,39 durch Schwergängigkeit, wie vorstehend bereits beschrieben, erfolgt, oder bis der Anschlag 32' zur Anlage am Widerlager 33 gelangt. In beiden vorgeschilderten Fällen reicht die Vorspannkraft der Feder 19 nicht zum Weiterdrehen des Betätigungshebels 13 aus, die Feder 19 wird daher bei stehenbleibendem Zylinderkörper 21 während des nachfolgenden Festbremshubes, wie vorstehend bereits geschildert, komprimiert.

Falls während des nachfolgenden Lösevorganges der Bremsen der Festbremshub beendet wird, d.h. die Bremsbacken 4 nur noch nahezu kraftfrei an der Bremsscheibe 5 anliegen, bevor bei der rückwärts- bzw. gemäß Fig.1 linksgerichteten Relativbewegung des Zugankers 24 relativ zum Zylinderkörper 21 der Anschlagteil 22 zur Anlage am ersten Anschlag 23 gelangt, was beispielsweise infolge unzureichender Spielnachstellung während des Einbremsvorganges oder durch Bremsbackenverschleiß während der vorangehenden Bremsung verursacht sein kann, so vermag bei noch im Abstand vor dem Widerlager 33 befindlichem Anschlag 32' und durch den Kraftabbau wieder verstellbarem Schraubgetriebe 37,39 die Feder 19 den Zylinderkörper 21 nach rechts zu verschieben, wobei der Übersetzungshebel 17 und über den Hebel 18 damit auch der Betätigungshebel 13 entsprechende Drehungen erfahren. Diese Drehungen werden, wie bereits vorstehend zum Einbremsvorgang mit übermäßigem Anlegehub beschrieben, durch das sperrende Klinkenradgetriebe 56'60' auf die Nachstellerausgangswelle 45 und von dieser über das Kegelradgetriebe 43,44 in eine Betätigung des Schraubgetriebes 37,39 in Verkürzrichtung der Zangenzugstange 3 und damit eine Lösehubverkleinerung für die Bremsbacken 4 übertragen. Dieser Nachstellvorgang hält an, bis der ersten Anschlag 23 an dem Anschlagteil 22 zur Anlage gelangt. Beim während des nachfolgenden Lösevorganges erfolgenden Einfahren der Kolbenstange 11 in den Bremszylinder 6 bis zum Anlegen dessen Kolbens 76 an den Bremszylinderboden 77 wird anfänglich die Zugstange 16 insgesamt unter Linksdrehen des Betätigungshebels 13 nach links versetzt und sodann in der Zugstange 16 der zweite Anschlag 29 bis zur Anlage am Ringflansch 30 verschoben und der Betätigungshebel 13 weiter bis zur Anlage des Anschlages 32 am Widerlager 33 zurückgedreht; die Reihenfolge dieser Bewegungen an der Zugstange 16 kann auch vertauscht erfolgen, sie hängt von den jeweiligen Reibungsverhältnissen ab und ist unwesentlich. Beim Zurückdrehen des Betätigungshebels 13 bis zur Anlage am Widerlager 33 ratscht das Klinkenradgetriebe 56',60' durch, während das Klinkenradgetriebe 56,60 die Nachstellerausgangswelle 45 gegen den Rohransatz 47 sperrt und hierdurch an einem Mitdrehen hindert. Das Kegelradgetriebe 43,44 und damit das Schraubgetriebe 37,39 verbleiben also in Ruhe und es erfolgt kein weiterer Nachstellvorgang, die Bremsbacken 4 werden währenddessen um ihren Sollhub von der Bremsscheibe 5 abgehoben.

Zum Austausch verschlissener gegen unverschlissene Bremsbacken 4 ist die Zangenzugstange 3 durch Rückstellen des Hubnachstellers 12 zu verlängern. Zum Rückstellen des Hubnachstellers 12 wird vermittels eines an die Schlüsselfläche 72 angesetzten Drehwerkzeuges, zumeist eines Schraubenschlüssels, die Nockenwelle 62 gemäß den Figuren 3 bis 5 nach links gedreht. Unter Überwinden der Kraft der Drehfeder 67 wird dabei im Rahmen des Spieles des Drehanschlages 68 die Nockenwelle 62 zur stehenbleibenden Nachstellerausgangswelle 45 relativ verdreht, beide anfänglich dieser Relativdrehung eingerasteten Klinkenradgetriebe 56,60 und 56',60' sperren eine Drehmitnahme der Nachstellerausgangswelle 45 durch deren Drehabstützung zum Rohransatz 47 bzw. zur Nachstellereingangswelle 51, welche durch den geschlossenen Anschlag 32,33 an einer entsprechenden Drehung gehindert ist. Während der Relativdrehung der Nockenwelle 62 zur Nachstellerausgangswelle 45 drehen sich die Nocken 61 und 61' aus ihrer aus Fig.3 ersichtlichen Drehlage relativ zu den Klinken 56,56' in die aus Fig.4 ersichtliche Drehlage, wobei die Klinken 56,56' entgegen ihren Belastungen durch die Federn 65,65' um die Bolzen 55 gedreht werden und die Klinkenradgetriebe 56,60 und 56',60' somit ausgerastet werden, wie es in Fig.4 dargestellt ist. Beim weiteren Drehen der Nockenwelle 62 wird über den nunmehr linksseitig geschlossenen Drehanschlag 68 und bei ausgerasteten Klinkenradgetrieben 56,60 sowie 56',60' die Nachstellerausgangswelle 45 mitgedreht, wodurch über das Kegelradgetriebe 43,44 die Mutter 39 auf der Gewindespindel 37 in Entfernungsrichtung vom Auge 41 verschraubt wird und damit die Länge der Zangenzugstange 3 vergrößert wird. Durch dieses Verlängern der Zangenzugstange 3 werden die Bremsbacken 4 derart von der Bremsscheibe 5 entfernt, daß der Bremsbackenaustausch möglich ist. Beim nächstfolgenden Bremsvorgang erfolgt ein Wiederjustieren des Anlegehubes. Beim nach dem Verlängern der Zangenzugstange 3 erfolgenden Freigeben der Nockenwelle 62 wird diese durch die Drehfeder 67 unter Freigabe der Klinkenradgetriebe 56,60 und 56',60' wieder in die aus Fig.5 ersichtliche Relativdrehlage zur Nachstellerausgangswelle 45 zurückgedreht.

In Abänderung vom vorstehend beschriebenen Ausführungsbeispiel kann der das Sollüftspiel bestimmende Abstand s an anderer Stelle im Steuergestänge 16,17,18 beispielsweise in Form einer Langloch-Anlenkung bzw. Lagerung oder auch als spielbehafteter Drehanschlag zwischen den relativverdrehbar ausgebildeten Armen des Übersetzungshebels 17 oder zwischen dem Betätigungshebel 13 und der Nachstellereingangswelle 51 angeordnet werden. Ebenso sind Abwandlungen zur Feder 19 möglich, entsprechend der Verlagerung des Abstandes s kann auch die Feder 19 an andere Stellen des Steuergestänges verlagert und gff. in eine Drehfeder umgewandelt werden. Bei entsprechender Ausbildung des Übersetzungshebels 17 kann dieser unter Entfall des Hebels 18 beispielsweise vermittels einer Kulissenführung unmittelbar mit dem Betätigungshebel 13 gekoppelt werden, der Hubnachsteller 12 ist insgesamt um die Achse 14 beispielsweise um 90° gedreht anordenbar, derart, daß die Achse 15 in der Zeichenebene der Fig.1 verläuft. An Stelle der Klinkenradgetriebe 56,60 und/oder 56'60' können andersartige Einweg-Drehkupplungen vorgesehen werden, welche jedoch durch Relativdrehung der Nockenwelle 62 ausrastbar sein müssen. In weiterer Abänderung ist es möglich, die Achsen 14 und 15 gleichachsig anzuordnen, wodurch die Nachstellerausgangs- und -eingangswelle 45 und 51 in gleichachsige Lage zum Schraubgetriebe 37,39 gelangen; die Nachstellerausgangswelle 45 kann dabei unter Entfall des Kegelradgetriebes 43,44 unmittelbar mit der Mutter 39 verbunden werden. Des weiteren ist es möglich, nicht die Mutter 39 als drehbares Teil des Schraubgetriebes 37,39 auszubilden, sondern sie undrehbar zu haltern und statt dessen die Gewindespindel 37 drehbar auszubilden und mit der Nachstellerausgangswelle 45 zu koppeln. In jeder Ausführungsform kann das Schraubgetriebe auch spannschloßartig, mit zwei gegenläufigen Verschraubungsabschnitten entsprechend der eingangs erwähnten DE-OS 23 46 828 ausgebildet werden.

**Bezugszeichenliste**

| | |
|---|---|
| 1 | Zangenhebel |
| 2 | Zangenhebel |
| 3 | Zangenzugstange |
| 4 | Bremsbacke |
| 5 | Bremsscheibe |
| 6 | Bremszylinder |
| 7 | Zylindergehäuse |
| 8 | Zwischenlage |
| 9 | Rahmenteil |
| 10 | Lagerbock |
| 11 | Kolbenstange |
| 12 | Hubnachsteller |
| 13 | Betätigungshebel |
| 14 | Achse |
| 15 | Achse |
| 16 | Zugstange |
| 17 | Übersetzungshebel |
| 18 | Hebel |
| 19 | Feder |
| 20 | Anschlagvorrichtung |
| 21 | Zylinderkörper |
| 22 | Anschlagteil |
| 23 | erster Anschlag |
| 24 | Zuganker |
| 25 | Abwinklung |
| 26 | Anlenkstelle |
| 27 | Zangenhebelverlängerung |
| 28 | Anlenkstelle |
| 29 | zweiter Anschlag |
| 30 | Ringflansch |
| 31 | Widerlager |
| 32 | Anschlag |
| 32' | Anschlag |
| 33 | Widerlager |
| 34 | Radialmittelebene |
| 34' | Linie |
| 35 | Gehäuse |
| 36 | Auge |
| 37 | Gewindespindel |
| 38 | Gewinde |
| 39 | Mutter |
| 37,39 | Schraubgetriebe |
| 40 | Deckel |
| 41 | Auge |
| 42 | Faltenbalg |
| 43 | Kegelverzahnung |
| 44 | Kegelrad |
| 43,44 | Kegelradgetriebe |
| 45 | Nachstellerausgangswelle |
| 46 | Wälzlager |
| 47 | Rohransatz |
| 48 | Deckelteil |
| 49 | Distanzring |
| 50 | Kugel |
| 51 | Nachstellereingangswelle |
| 52 | Dichtring |
| 53 | Aussparung |
| 54 | Aussparung |
| 55 | Bolzen |
| 56,56' | Klinke |
| 57,57' | Schenkel |
| 58,58' | Schenkel |
| 59,59' | Zahnung |
| 60,60' | Zahnung |
| 56,60 | Klinkenradgetriebe |
| 56',60' | Klinkenradgetriebe |
| 61,61' | Nocken |
| 62 | Nockenwelle |
| 63 | Sackbohrung |
| 64,64' | Druckbolzen |
| 65,65' | Feder |
| 66 | Ringraum |
| 67 | Drehfeder |
| 68 | Drehanschlag |
| 69 | Fortsatz |
| 70 | Hülsenabschnitt |
| 71 | Abschnitt |
| 72 | Schlüsselfläche |
| 73 | Abschnitt |
| 74 | Dichtungsring |
| 75 | Ringfeder |
| 76 | Kolben |
| 77 | Bremszylinderboden |
| a | Abstand |
| b | Abstand |
| c | Abstand |
| d | Abstand |
| s | Abstand |

**Patentansprüche**

1. Zangenartiges Bremsgestänge für Fahrzeuge, insbesondere für Scheibenbremsen von Schienenfahrzeugen, mit zwei Zangenhebeln (1 und 2), deren eine Enden mit Bremsbacken (4) gekoppelt sind, deren andere Enden vermittels eines Bremskraftmotors (6) auseinanderspreizbar sind und welche in ihrem mittleren Bereich durch eine Zangenzugstange (3) mit integriertem, ein Schraubgetriebe (37,39) beinhaltendem Hubnachsteller (12) verbunden sind, wobei der Hubnachsteller (12) vermittels eines Steuergestänges (16,17,18) in Abhängigkeit vom Spreizhub an den bremskraftmotorseitigen Enden der Zangenhebel (1;2) steuerbar ist, mit einem zumindest nahe der Anlenkstelle (26) eines Kraftabgebegliedes (11) des Bremskraftmotors (6) an dem einen Zangenhebel (2) angelenkten, ersten Steuergestängeteil (16) und mit einem an einem Widerlager (31) abgestützten, zweiten Steuergestängeteil (17), wobei das Widerlager (31) mit der bremskraftmotorseitigen Lagerstelle (10) des anderen Zangenhebels (1) fest verbunden ist, dadurch gekennzeichnet, daß das Steuergestänge (16,17,18) als erstes Steuergestängeteil eine Zugstange (16) aufweist, deren eines Ende am einen Zangenhebel (2) angelenkt ist, die sich zumindest annähernd parallel zur Kraftabgaberichtung des Bremskraftmotors (6) in Richtung zum anderen Zangenhebel (1) erstreckt und deren anderes Ende am einen Ende eines zweiarmigen, das zweite Steuergestängeteil bildenden Übersetzungshebels (17) angelenkt ist, daß der im wesentlichen senkrecht zur Kraftabgaberichtung verlaufende Übersetzungshebel (17) nahe dieser Anlenkung am Widerlager (31) gelagert und mit seinem anderen Ende mit einem Betätigungshebel (13) des Hubnachstellers (12) gekoppelt ist, und daß das Steuergestänge (16,17,18) zwischen der Anlenkung am einen Zangenhebel (2) und der Ankopplung am Betätigungshebel (13) ein elastisches Glied aufweist, das in Bewegungsrichtung beim Zuspannen der Bremse entgegen der Kraft einer vorgespannten Feder (19) verformbar ist.

2. Bremsgestänge nach Anspruch 1, dadurch gekennzeichnet, daß das Steuergestänge (16,17,18) im Bereich zwischen seiner Anlenkung (28) am einen Zangenhebel (2) und seiner Kopplung mit dem Betätigungshebel (13) eine Anschlagvorrichtung (20) mit einem dem Sollüfthub proportionalen Spiel (s) aufweist.

3. Bremsgestänge nach Anspruch 1 oder 2, dadurch gekennzeichnet, daß die Zugstange (16) als gegen die Kraft der vorgespannten Feder (19) verlängerbares Federglied ausgebildet ist.

4. Bremsgestänge nach Anspruch 2 oder 3, dadurch gekennzeichnet, daß die Anschlagvorrichtung (20) in das Federglied integriert angeordnet ist.

5. Bremsgestänge nach Anspruch 1, dadurch gekennzeichnet, daß das Federglied einen die Feder (19) beinhaltenden Zylinderkörper (21) aufweist, daß die Feder (19) zwischen dem Zylinderkörper (21) und einem in diesem beweglichen, entgegen seiner Belastung durch die Feder (19) durch einen ersten Anschlag (23) abgefangenen Anschlagteil (22) eingespannt ist, daß in den Zylinderkörper (21) ein Zuganker (24) relativverschieblich eingreift, der die Feder (19) durchsetzt und durch einen zweiten Anschlag (29) in Spannrichtung der Feder (19) mit dem Anschlagteil (22) koppelbar ist, wobei der zweite Anschlag (29) das dem Sollhub proportionale Spiel (s) aufweist.

6. Bremsgestänge nach Anspruch 1 oder 2, dadurch gekennzeichnet, daß die beiden Arme des zweiarmigen Hebels entgegen der Kraft der als Drehfeder ausgebildeten und zwischen die Arme eingespannten, vorgespannten Feder relativverdrehbar sind.

7. Bremsgestänge nach einem oder mehreren der vorstehenden Ansprüche, dadurch gekennzeichnet, daß die Zugstange (16) an ihrem dem einen Zangenhebel (2) zugewandten Ende eine rechtwinklig in Richtung zum Bremskraftmotor (6) auskragende Abwinklung (25) aufweist, deren Ende an einer die Anlenkstelle (26) zum Bremskraftmotor (6) dieses einen Zangenhebels (2) überragenden, zur Länge des Zangenhebels (2) kurzen Zangenhebelverlängerung (27) angelenkt ist.

8. Bremsgestänge nach einem oder mehreren der vorstehenden Ansprüche, dadurch gekennzeichnet, daß die Längen am einen Zangenhebel (2) und am Übersetzungshebel (17) zumindest annähernd nach der Formel

$$a:d = b:c$$

bemessen sind, wobei
a der Abstand am einen Zangenhebel (2) zwischen den Anlenkungen des Bremskraftmotors (6) und der Zugstange (16),
b der Abstand am Übersetzungshebel (17) zwischen der Anlenkung der Zugstange (16) und der Lagerung am Widerlager (31),
c der Abstand am Übersetzungshebel (17) zwischen der Lagerung am Widerlager (31) und der Kopplung zum Betätigungshebel (13) und
d der Abstand am einen Zangenhebel (2) zwischen den Anlenkungen des Bremskraftmotors (6) und der Zangenzugstange (3)
ist.

9. Bremsgestänge nach Anspruch 8, dadurch gekennzeichnet, daß das Verhältnis der Abstände b:c etwa 1:4 beträgt.

10. Bremsgestänge nach einem oder mehreren der vorstehenden Ansprüche, gekennzeichnet durch einen annähernd parallel zur Zangenzugstange (3) verlaufenden Hebel (18), der einerseits am betätigungshebelseitigen Ende des Übersetzungshebels (17) und andererseits am Betätigungshebel (13) zu deren Koppelung angelenkt ist.

11. Bremsgestänge nach anspruch 10, dadurch gekennzeichnet, daß der Betätigungshebel (13) mit einer rechtwinklig zur Zangenzugstange (3) verlaufenden Nachstellereingangswelle (51) verbunden ist, die über eine erste Einwegdrehkupplung (56',60') mit einer Nachstellerausgangswelle (45) gekuppelt ist, daß die Nachstellerausgangswelle (45) über eine zweite Einwegdrehkupplung (56,60) gegen ein drehfestes Gehäuseteil (47) abgestüzt und vermittels eines Kegelradgetriebes (43,44) mit einem drehbaren Teil (39) des Schraubgetriebes (37,39) gekoppelt ist.

12. Bremsgestänge nach Anspruch 11, dadurch gekennzeichnet, daß die gff. als Klinkenradgetriebe (56,60; 56',60') ausgebildeten, beiden Einwegdrehkupplungen willkürlich entsperrbar sind und daß die Nachstellerausgangswelle (45) bei entsperrten Einwegdrehkupplungen willkürlich drehbar ist.

13. Bremsgestänge nach Anspruch 11 oder 12, dadurch gekennzeichnet, daß die Nachstellereingangswelle (51) einen nur in Lösestellung des Bremsgestänges geschlossenen Drehanschlag (32,33) zum drehfesten Gehäuseteil (47) aufweist.

**Claims**

1. A calliper-type brake rod system for motor vehicles, more particularly for disc brakes in rail vehicles, with two calliper levers (1 and 2), whose first ends are coupled to brake shoes (4), whose other ends can be spread apart by means of a braking force motor (6) and which are connected in their central region by means of a calliper tie rod (3) to an integrated stroke adjuster (12) comprising worm gearing (37, 39), the stroke adjuster (12) being controllable by means of a control rod system (16, 17, 18) as a function of the expansion stroke at the ends of the calliper levers (1; 2) near the braking force motor, with a first control rod section (16), which is articulatedly connected to the first calliper lever (2) at least in the vicinity of the articulation site (26) of a power output member (11) of the braking force motor (6), and with a second control rod section (17), which is supported against an abutment (31), the abutment (31) being securely connected to the mounting site (10) of the other calliper lever (1) on the side of the braking force motor (6), characterised in that: the control rod system (16, 17, 18) comprises a tie rod (16) as a first control rod section, whose first end is articulatedly connected to the first calliper lever (2), which extends at least approximately parallel to the power output direction of the braking force motor (6) in the direction towards the other calliper lever (1) and whose other end is articulatedly connected to one end of a two-arm transmission lever forming the second control rod section; the transmission lever (17) extending substantially perpendicular to the power output direction is mounted on the abutment (31) in the vicinity of said articulation site and is coupled with its other end to an actuating lever (13) of the stroke adjuster (12); and the control rod system (16, 17, 18) comprises an elastic member between the articulation site to the first calliper lever (2) and the coupling to the actuating lever (13), which elastic member can be deformed in the direction of movement against the force of a pretensioned spring (19) when the brake is actuated.

2. A brake rod system according to claim 1, characterised in that, in the region between its articulation site (28) to the first calliper lever (2) and its coupling to the actuating lever (13), the control rod system (16, 17, 18) comprises a stop device (20) having a degree of clearance (s) proportional to the nominal release stroke.

3. A brake rod system according to claim 1 or 2, characterised in that the tie rod (16) is constructed as a spring member which can be lengthened against the force of the pretensioned spring (19).

4. A brake rod system according to claim 2 or 3, characterised in that the stop device (20) is integrated into the spring member.

5. A brake rod system according to claim 1, characterised in that the spring member comprises a cylinder body (21) containing the spring (19), the spring (19) is tensioned between the cylinder body (21) and a stop element (22), which is displaceable within the cylinder body (21) and can be supported by a first stop (23) against its loading by the spring (19), a connecting rod (24) engages in the cylinder body (21) with the capacity for relative displacement, penetrates the spring (19) and can be coupled by a second stop (29) in the tensioning direction of the spring (19) to the stop element (22), the second stop (29) having a degree of clearance (s) proportional to the nominal stroke.

6. A brake rod system according to claim 1 or 2, characterised in that the two arms of the two-arm lever can be rotated relative to one another against the force of the pretensioned spring, which is constructed as a torsion spring and is tensioned between the arms.

7. A brake rod system according to one or more of the preceding claims, characterised in that, at its end facing the first calliper lever (2), the tie rod (16) comprises an angled section (25), which projects at right angles in the direction of the braking force motor (6) and whose end is articulatedly connected to a calliper lever extension (27), which projects beyond the articulation site (26) to the braking force motor (6) and which is short compared with the length of the calliper lever (2).

8. A brake rod system according to one or more of the preceding claims, characterised in that the lengths on one calliper lever (2) and on the transmission lever (17) are measured at least approximately according to the equation

$$a:d = b:c,$$

where

a is the distance on the first calliper lever (2) between the articulation points of the braking force motor (6) and the tie rod (16),
b is the distance on the transmission lever (17) between the articulation site of the tie rod (16) and the mounting site on the abutment (31),
c is the distance on the transmission lever (17) between the mounting site on the abutment (31) and the coupling to the actuating lever (13), and
d is the distance on one calliper lever (2) between the articulation sites of the braking force motor (6) and the calliper tie rod (3).

9. A brake rod system according to claim 8, characterised in that the ratio of the distances b:c is approximately 1:4.

10. A brake rod system according to one or more of the preceding claims, characterized by a lever (18), which extends approximately parallel to the calliper tie rod (3) and which is articulatedly connected at one end to the actuating-lever end of the transmission lever (17) and at its other end to the coupling site of the actuating lever (13).

11. A brake rod system according to claim 10, characterised in that the actuating lever (13) is connected to an adjuster input shaft (51), which extends at right angles to the calliper tie rod (3) and is coupled by means of a first one-way rotary coupling (56', 60'), the adjuster output shaft (45) is supported by means of a second one-way rotary coupling (56, 60) against a rotationally fixed housing part (47) and is coupled by means of a bevel wheel gearing (43, 44) to a rotatable part (39) of the worm gearing (37, 39).

12. A brake rod system according to claim 11, characterised in that the two one-way rotary couplings, which are optionally constructed as pawl gearing (56, 60; 56', 60'), are lockable and the adjuster output shaft (45) can be rotated at will when the one-way couplings are unlocked.

13. A brake rod system according to claim 11 or 12, characterised in that the adjuster input shaft (51) comprises a rotary abutment (32, 33) relative to the rotationally fixed housing part (47), the rotary abutment only being closed in the release position of the brake rod system.

**Revendications**

1. Timonerie de frein du type à étrier pour véhicules, notamment pour freins à disque de véhicules sur rails comportant deux leviers d' étrier (1 et 2) dont des premières extrémités sont accouplées à des mâchoires de freinage (4), dont les autres extrémités sont écartables au moyen d'un moteur de force de freinage (6) et qui sont reliés, dans leur partie médiane, par une tige de traction d'étrier (3), à un ajusteur de course (12) intégré renfermant un engrenage à vis (37, 39), l'ajusteur de course (12) pouvant être commandé au moyen d'une tringlerie de commande (16, 17, 18) en fonction de la course d'écartement aux extrémités des leviers d'étrier (1 ; 2), qui sont du côté du moteur de force de freinage, un premier élément (16) de la tringlerie de commande étant articulé à un premier levier d'étrier (2), au moins près du point d'articulation (26) d'un organe distributeur de force (11) du moteur de force de freinage (6), et un deuxième élément (17) de la tringlerie de commande s'appuyant sur un contre-appui (31), le contre-appui (31) étant relié de manière fixe au point d'appui (10), situé du côté du moteur de force de freinage, de l'autre levier d'étrier (1), caractérisée en ce que la tringlerie de commande (16, 17, 18) présente, comme première partie de la tringlerie de commande, une tige de traction (16), dont l'une des extrémités est articulée au premier levier d'étrier (2), tige qui s'étend, tout au moins approximativement, parallèlement à la direction de distribution de la force du moteur de force de freinage (6) en direction de l'autre levier d'étrier (1) et dont l'autre extrémité est articulée à l'une des extrémités d'un levier de transmission (17) à deux bras qui forme le second élément de tringlerie de commande, en ce que le levier de transmission (17), qui est essentiellement perpendiculaire à la direction de distribution de la force, est monté à rotation, près de cette articulation, sur le contre-appui (31) et est accouplé, par son autre extrémité, à un levier d'actionnement (13) de l'ajusteur de course (12), et en ce que la tringlerie de commande (16, 17, 18) présente, entre l'articulation au premier levier d'étrier (2) et l'accouplement au levier d'actionnement (13), un organe élastique qui est déformable dans le sens du mouvement lors du serrage du frein à l'encontre de la force d'un ressort précontraint (19).

2. Timonerie de frein selon la revendication 1, caractérisée en ce que la tringlerie de commande (16, 17, 18) présente, dans la région située entre son articulation (28) au premier levier d'étrier (2) et son accouplement au levier d'actionnement (13), un dispositif de butée (20) avec un jeu (s) proportionnel à la course de déblocage nominale.

3. Timonerie de frein selon la revendication 1 ou 2, caractérisée en ce que la tige de traction (16) est réalisée sous la forme d'un organe à ressort qui peut s'allonger à l'encontre de la force du ressort précontraint (19).

4. Timonerie de frein selon la revendication 2 ou 3, caractérisée en ce que le dispositif de butée (20) est intégré dans l'organe à ressort.

5. Timonerie de frein selon la revendication 1, caractérisée en ce que l'organe à ressort présente un corps de cylindre (21) qui contient le ressort (19), en ce que le ressort (19) est tendu entre le corps de cylindre (21) et une pièce de butée (22) mobile dans celui-ci et interceptée par une première butée (23) à l'encontre de sa sollicitation par le ressort (19), en ce qu'un tirant (24) est en prise dans le corps de cylindre (21) en étant translatable relativement à celui-ci, tirant qui traverse le ressort (19) et qui peut être couplé à la pièce de butée (22) par une seconde butée (29) dans le sens de la tension du ressort (19), la seconde butée (29) présentant le jeu (s) qui est proportionnel à la course nominale.

6. Timonerie de frein selon la revendication 1 ou 2, caractérisée en ce que les deux bras du levier à deux bras peuvent subir une torsion relative à l'encontre de la force du ressort précontraint, réalisé sous la forme d'un ressort de torsion et tendu entre les bras.

7. Timonerie de frein selon une ou plusieurs des revendications précédentes, caractérisée en ce que la tige de traction (16) présente, à son extrémité tournée vers le premier levier d'étrier (2), un coude (25) qui fait saillie à angle droit en direction du moteur de force de freinage (6), coude dont l'extrémité est articulée à un prolongement (27) du levier d'étrier qui est court par rapport à la longueur du levier d'étrier (2) et qui dépasse le point d'articulation (26) par rapport au moteur de force de freinage (6) de ce levier d'étrier (2).

8. Timonerie de frein selon une ou plusieurs des revendications précédentes, caractérisée en ce que les longueurs sur le premier levier d'étrier (2) et sur le levier de transmission (17) sont calculées, tout au moins approximativement, selon la formule

$$a : d = b : c$$

a étant la distance, sur le premier levier d'étrier (2), entre les articulations du moteur de force de freinage (6) et de la tige de traction (16),
b, la distance, sur le levier de transmission (17), entre l'articulation de la tige de traction (16) et le palier de rotation sur le contre-appui (31),
c, la distance, sur le levier de transmission (17), entre le palier de rotation sur le contre-appui (31) et l'accouplement au levier d'actionnement (13) et
d, la distance, sur le premier levier d'étrier (2), entre les articulations du moteur de force de freinage (6) et de la tige de traction d'étrier (3).

**9.** Timonerie de frein selon la revendication 8, caractérisée en ce que le rapport des distances b : c est d'environ 1:4.

**10.** Timonerie de frein selon une ou plusieurs des revendications précédentes, caractérisée par un levier (18) qui est approximativement parallèle à la tige de traction d'étrier (3) et qui est articulé, d'une part, à l'extrémité du levier de transmission (17), située du côté du levier d'actionnement, et, d'autre part, au levier d'actionnement (13), pour leur accouplement.

**11.** Timonerie de frein selon la revendication 10, caractérisée en ce que le levier d'actionnement (13) est relié à un arbre d'entrée (51) de l'ajusteur s'étendant perpendiculairement à la tige de traction d'étrier (3), arbre qui est accouplé, par un premier joint tournant unidirectionnel (56', 60'), à un arbre de sortie (45) de l'ajusteur, en ce que l'arbre de sortie (45) de l'a justeur s'appuie, par un second joint tournant unidirectionnel (56, 60), contre une partie (47) du bâti, immobile en rotation, et est accouplé à une partie rotative (39) de l'engrenage à vis (37, 39) au moyen d'un engrenage conique (43, 44).

**12.** Timonerie de frein selon la revendication 11, caractérisée en ce que les deux joints tournants unidirectionnels, qui sont le cas échéant réalisés sous la forme d'un engrenage à roue à cliquet (56, 60 ; 56', 60'), peuvent être débloqués arbitrairement et en ce que l'arbre de sortie (45) de l'ajusteur peut être déplacé en rotation arbitrairement lorsque les joints tournants unidirectionnels sont débloqués.

**13.** Timonerie de frein selon la revendication 11 ou 12, caractérisée en ce que l'arbre d'entrée (51) de l'ajusteur présente une butée de rotation (32, 33) par rapport à la partie (47) immobile en rotation du bâti, butée de rotation qui n'est fermée qu'en position de desserrage de la timonerie de frein.

Fig.1

Fig. 2

Fig.3          Fig.4          Fig.5

EP 0 499 971 B1